# EUROPEAN PATENT APPLICATION

(11) **EP 4 518 421 A1**
(43) Date of publication of application: **05.03.2025**
(21) Application number: 23795888.9
(22) Date of filing: 27.02.2023
(51) Int. Cl.: H04W 28/06, H04W 84/12

(54) **COMMUNICATION DEVICE, CONTROL METHOD FOR SAME, AND PROGRAM**

(30) Priority: 27.04.2022 JP 2022073673
(71) Applicant: CANON KABUSHIKI KAISHA, Tokyo 146-8501 (JP)
(72) Inventor: YOSHIKAWA, Yuki, Tokyo 146-8501 (JP)
(74) Representative: Canon Europe Limited
(86) International application number: PCT/JP2023/006992
(87) International publication number: WO 2023/210140

(57) **Abstract**

A communication apparatus generates a MAC frame including an HT Control field, which complies with an IEEE 802.11 series standard. In the generated MAC frame, the HT Control field is formed to include an A-Control subfield by each of first 2 bits being set to 1. Furthermore, the MAC frame is formed to further include a variable-length extended field for extending the A-Control subfield included in the HT Control field. The communication apparatus transmits the generated MAC frame to a partner apparatus.

## Description

### TECHNICAL FIELD

The present invention relates to a communication apparatus for performing wireless communication, a control method therefor, and a program.

### BACKGROUND ART

As wireless local area network (Wireless LAN or WLAN) communication standards defined by IEEE (Institute of Electrical and Electronics Engineers), IEEE 802.11 series standards are known. The IEEE 802.11 series standards include, for example, IEEE 802.11a/b/g/n/ac/ax standards. For example, in the IEEE 802.11ax (HE: High Efficiency) standard, a technique for not only implementing high peak throughput of 9.6 gigabits per sec (Gbps) at maximum but also improving the communication rate under congestion by using OFDMA (Orthogonal Frequency Division Multiple Access) is standardized (see PTL 1).

The format of a MAC (Media Access Control) frame defined by the IEEE 802.11 series standards includes 4-octet (32-bit) HT (High Throughput) Control field. In a case where both the first 2 bits of the HT Control field are set to "1", the HT Control field is configured as an HE variant. In this case, a 4-bit (B2 to B5) Control ID subfield and a Control Information subfield can be assigned to a 30-bit subfield following the first 2 bits (B0 and B1) in the HT Control field.

### CITATION LIST

### PATENT LITERATURE

PTL 1: Japanese Patent Laid-Open No. 2018-50133

### SUMMARY OF INVENTION

### TECHNICAL PROBLEM

As described above, a 4-octet (32-bit) length is currently assigned to the HT Control field. However, the length of the HT Control field may be short due to, for example, an increase in control information along with function extension in the future. The number of bits of the Control ID subfield used to identify the type of control information stored in the Control Information subfield may also be short due to an increase in the number of types of control information.

### SOLUTION TO PROBLEM

To solve the above problems, the present invention provides a technique of performing wireless communication using a MAC frame including a control field extended to be able to more flexibly store control information.

A communication apparatus according to one aspect of the present invention comprises: generation means for generating a MAC frame including an HT Control field, which complies with an IEEE 802.11 series standard, wherein the HT Control field is formed to include an A-Control subfield by each of first 2 bits being set to 1 and the MAC frame is formed to further include a variable-length extended field for extending the A-Control subfield included in the HT Control field; and transmission means for transmitting the MAC frame generated by the generation means.

A communication apparatus according to another aspect of the present invention comprises: generation means for generating a MAC frame including an HT Control field, which complies with an IEEE 802.11 series standard, wherein the HT Control field is formed to include an A-Control subfield by each of first 2 bits being set to 1 and the HT Control field is formed as an extended field by extending the A-Control subfield to a variable-length subfield; and transmission means for transmitting the MAC frame generated by the generation means.

A communication apparatus according to still another aspect of the present invention comprises: reception means for receiving a MAC frame including an HT Control field, which complies with an IEEE 802.11 series standard; and analysis means for analyzing the MAC frame received by the reception means, wherein the HT Control field is formed to include an A-Control subfield by each of first 2 bits being set to 1 and the MAC frame is formed to further include a variable-length extended field for extending the A-Control subfield included in the HT Control field.

A communication apparatus according to yet another aspect of the present invention comprises: reception means for receiving a MAC frame including an HT Control field, which complies with an IEEE 802.11 series standard; and analysis means for analyzing the MAC frame received by the reception means, wherein the HT Control field is formed to include an A-Control subfield by each of first 2 bits being set to 1 and the HT Control field is formed as an extended field by extending the A-Control subfield to a variable-length subfield.

### ADVANTAGEOUS EFFECTS OF INVENTION

According to the present invention, it is possible to perform wireless communication using a MAC frame including a control field extended to be able to more flexibly store control information.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a network;
Fig. 2 is a block diagram showing an example of the hardware arrangement of a communication apparatus;
Fig. 3 is a block diagram showing an example of the functional arrangement of the communication apparatus;
Fig. 4 is a view showing an example of the format of a MAC frame (comparative example);
Fig. 5A is a view showing an example of the format of a MAC frame;
Fig. 5B is a view showing an example of the format of the MAC frame;
Fig. 5C is a view showing an example of the format of a MAC frame;
Fig. 6 is a table showing an example of the correspondence between the value of a control ID subfield and its meaning; and
Fig. 7 is a sequence chart showing the procedure of communication processing by the communication apparatuses.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made on an invention that requires all such features, and multiple such features may be combined as appropriate. Furthermore, in the attached drawings, the same reference numerals are given to the same or similar configurations, and a redundant description thereof is omitted.

### <Network Configuration>

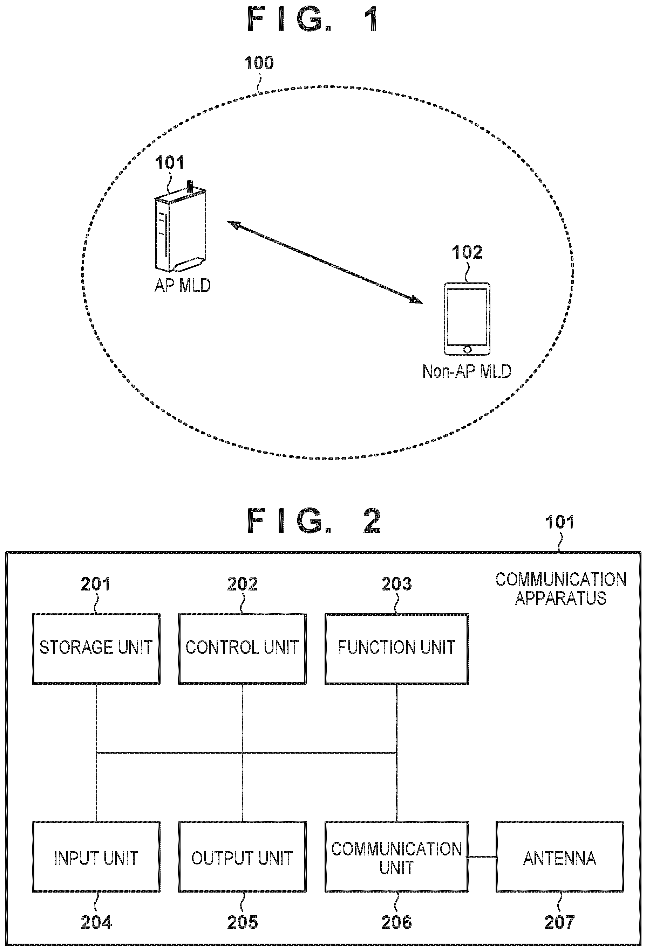

Fig. 1 shows an example of the configuration of a network to which communication apparatuses 101 and 102 join, which are communication apparatuses according to embodiments of the present disclosure. In this example, a network 100 is a wireless network, and the communication apparatuses 101 and 102 join the network 100.

The communication apparatus 101 is an access point (AP) having the role of creating the network 100. The communication apparatus 102 is a station (STA) having the role of joining the network 100 created by the AP (communication apparatus 101). Note that Fig. 1 shows the network formed by one AP and one STA but the number of APs and the number of STAs are not limited to these.

Each communication apparatus supports the IEEE 802.11be (EHT: Extremely High Throughput or Extreme High Throughput) standard as a wireless LAN communication standard, that is a successor standard of the IEEE 802.11ax (HE: High Efficiency) standard. Each communication apparatus can execute wireless communication complying with the IEEE 802.11be standard. In addition, each communication apparatus is configured to be able to execute wireless communication in a plurality of frequency bands (in the present embodiments, the 2.4-GHz band, 5-GHz band, and 6-GHz band). A frequency band usable by each communication apparatus is not limited to them, and each communication apparatus may be able to use a different frequency such as the 60-GHz band. Each communication apparatus is configured to be able to perform communication using frequency bandwidths of 20 MHz, 40 MHz, 80 MHz, 160 MHz, and 320 MHz. A bandwidth usable by each communication apparatus is not limited to them, and each communication apparatus may be able to use different bandwidths of, for example, 240 MHz and 4 MHz.

The communication apparatuses 101 and 102 can implement multi-user (MU) communication by executing OFDMA (Orthogonal Frequency Division Multiple Access) communication complying with the IEEE 802.11be standard. Multi-user communication is communication that multiplexes signals of a plurality of users. In OFDMA communication, frequency resources are allocated to the respective STAs so that some (RUs: Resource Units) of divided frequency bands do not overlap each other between the STAs, and the frequency resources (carrier waves) allocated to the respective STAs are orthogonal to each other. Therefore, the AP (communication apparatus 101) can communicate with the plurality of STAs (communication apparatuses 102) simultaneously (at the same time).

In the embodiments, the communication apparatuses 101 and 102 support the IEEE 802.11be standard, and may also support at least one of legacy standards, which are standards before the IEEE 802.11be standard. The legacy standards are the IEEE 802.11a/b/g/n/ac/ax standards. Note that in the present embodiments, at least one of the IEEE 802.11a/b/g/n/ac/ax/be standards will be referred to as the IEEE 802.11 series standard hereinafter.

The communication apparatuses 101 and 102 may support other communication standards such as Bluetooth^{®}, NFC (Near Field Communication), UWB (Ultra Wide Band), ZigBee, and MBOA (Multi Band OFDM Alliance) in addition to the IEEE 802.11 series standards. UWB includes, for example, wireless USB, wireless 1394, and Winet. The communication apparatuses 101 and 102 may further support communication standards of wired communication such as a wired LAN.

Each of the communication apparatuses 101 and 102 is a multi-link device (MLD) having a function of executing multi-link communication for performing communication by establishing a plurality of links (transmission paths) via a plurality of respective frequency channels. In multi-link communication, a plurality of links are established and used between an AP MLD mounted with a plurality of APs and a Non-AP MLD (STA MLD) mounted with a plurality of STAs. In the present embodiments, the communication apparatus 101 operates as an AP MLD and the communication apparatus 102 operates as a Non-AP MLD.

In multi-link communication, the plurality of links established by the communication apparatuses 101 and 102 are established using different frequency channels. Furthermore, the channel interval of the frequency channels used to establish the plurality of links can be at least larger than 20 MHz. The frequency channels indicate frequency channels which are defined by the IEEE 802.11 series standard and in which wireless communication complying with the IEEE 802.11 series standard can be executed. In the IEEE 802.11 series standard, a plurality of frequency channels are defined in each of the 2.4-, 5-, and 6-GHz frequency bands. In the IEEE 802.11 series standard, the bandwidth of each frequency channel is defined as 20 MHz. Note that a bandwidth of 40 MHz or more may be used in one frequency channel by bonding one frequency channel and its adjacent frequency channel.

The communication apparatus 101 can improve throughput in communication with the communication apparatus 102 by establishing a plurality of links with the communication apparatus 102 via the plurality of respective frequency channels and performing multi-link communication. Note that the communication apparatuses 101 and 102 may establish a plurality of links via different frequency bands in multi-link communication. Alternatively, the communication apparatuses 101 and 102 may establish a plurality of links via a plurality of different channels included in the same frequency band. Furthermore, in multi-link communication between the communication apparatuses 101 and 102, a plurality of links in the same frequency band and links in different frequency bands may be mixed.

When performing multi-link communication, each of the communication apparatuses 101 and 102 divides one data and transmits the data to the partner apparatus via the plurality of links. Alternatively, each of the communication apparatuses 101 and 102 may simultaneously transmit the same data via the plurality of links, thereby using communication via one link as backup communication for communication via another link. The communication apparatuses 101 and 102 may select a link to be used in accordance with the types of a frame and data to be transmitted.

The communication apparatuses 101 and 102 may be able to execute MIMO (Multiple-Input And Multiple-Output) communication. In this case, each of the communication apparatuses 101 and 102 includes a plurality of antennas. The transmission-side communication apparatus transmits signals of different streams from the respective antennas using the same frequency channel. The reception-side communication apparatus simultaneously receives all the signals of the plurality of streams using the plurality of antennas, and separates and decodes the signals of the streams. As compared with a case where no MIMO communication is executed, the communication apparatuses 101 and 102 can transmit/receive more data in the same time by executing MIMO communication. When performing multi-link communication, the communication apparatuses 101 and 102 may execute MIMO communication in some links.

The communication apparatus 101 can be, for example, a wireless LAN router or a personal computer (PC), but is not limited to them. The communication apparatus 102 can be, for example, a camera, a tablet terminal, a PC, a smartphone, a mobile phone, a headset, or a video camera, but is not limited to them. Each of the communication apparatuses 101 and 102 may be an information processing apparatus including, for example, a radio chip that can execute wireless communication complying with the IEEE 802.11be standard. Note that the information processing apparatus including the radio chip includes an antenna for transmitting a generated signal.

### <Hardware Arrangement of Communication Apparatus>

Fig. 2 is a block diagram showing an example of the hardware arrangement of the communication apparatus 101. The communication apparatus 101 includes a storage unit 201, a control unit 202, a function unit 203, an input unit 204, an output unit 205, a communication unit 206, and an antenna 207. Note that the communication apparatus 102 can have the same hardware arrangement as that of the communication apparatus 101.

The storage unit 201 is formed by one or more memories such as a ROM (Read Only Memory) and/or a RAM (Random Access Memory). The storage unit 201 stores computer programs for performing various operations (to be described later), and various kinds of information such as communication parameters for wireless communication. Note that another type of storage medium such as a flexible disk, a hard disk, an optical disk, a magneto-optical disk, a CD-ROM, a CD-R, a magnetic tape, a nonvolatile memory card, or a DVD may be used for the one or more memories forming the storage unit 201. The storage unit 201 may include, for example, a plurality of memories.

The control unit 202 is formed by one or more processers such as a CPU (Central Processing Unit) and/or an MPU (Micro Processing Unit). The control unit 202 controls the whole communication apparatus 101 by reading out computer programs stored in the storage unit 201 and executing them. Note that the control unit 202 may be configured to control the whole communication apparatus 101 by cooperation of computer programs and an OS (Operating System) stored in the storage unit 201. The control unit 202 may include a plurality of processors such as a multi-core processor, and may be configured to control the whole communication apparatus 101 by the plurality of processors.

The control unit 202 generates data or a signal (radio frame) to be transmitted in communication with another communication apparatus. In addition, the control unit 202 controls the function unit 203 to execute predetermined processing such as wireless communication, image capturing, printing, and projection. The function unit 203 is hardware used by the communication apparatus 101 to execute the predetermined processing.

The input unit 204 accepts various kinds of operations from the user. The output unit 205 performs various kinds of outputs to the user via a monitor screen or a loudspeaker. In this example, the output by the output unit 205 can be one or more of, for example, display on the monitor screen, audio output by the loudspeaker, and vibration output. The input unit 204 and the output unit 205 may be implemented as one module, like a touch panel display. Alternatively, each of the input unit 204 and the output unit 205 may be integrated with the communication apparatus 101, or may be provided separately from the communication apparatus 101.

The communication unit 206 controls wireless communication complying with the IEEE 802.11be standard or the like. The communication unit 206 controls the antenna 207 to transmit/receive signals for wireless communication generated by the control unit 202. The communication apparatus 101 communicates with the communication apparatus 102 via the communication unit 206 to transmit/receive various kinds of data such as image data, document data, and video data.

Note that the communication unit 206 may be configured to control wired communication by a wired LAN or the like and control wireless communication complying with another IEEE 802.11 series standard in addition to the IEEE 802.11be standard. If the communication apparatus 101 supports the NFC standard, Bluetooth^{®} standard, and the like in addition to the IEEE 802.11be standard, it may be configured to also control wireless communication complying with these communication standards. If the communication apparatus 101 is configured to be able to execute wireless communication complying with a plurality of communication standards, it may include a communication unit and an antenna supporting each of the different communication standards.

The antenna 207 is an antenna configured to allow communication in predetermined frequency bands (in the present embodiments, the 2.4-GHz band, the 5-GHz band, and the 6-GHz band). The communication apparatus 101 of the present embodiments includes one antenna but may include individual antennas for the respective frequency bands. If the communication apparatus 101 includes a plurality of antennas, it may include communication units 206 respectively corresponding to the antennas. Note that the antenna 207 may be provided separately from the communication unit 206, as shown in Fig. 2, or may be formed as one module combined with the communication unit 206.

### <Functional Arrangement of Communication Apparatus>

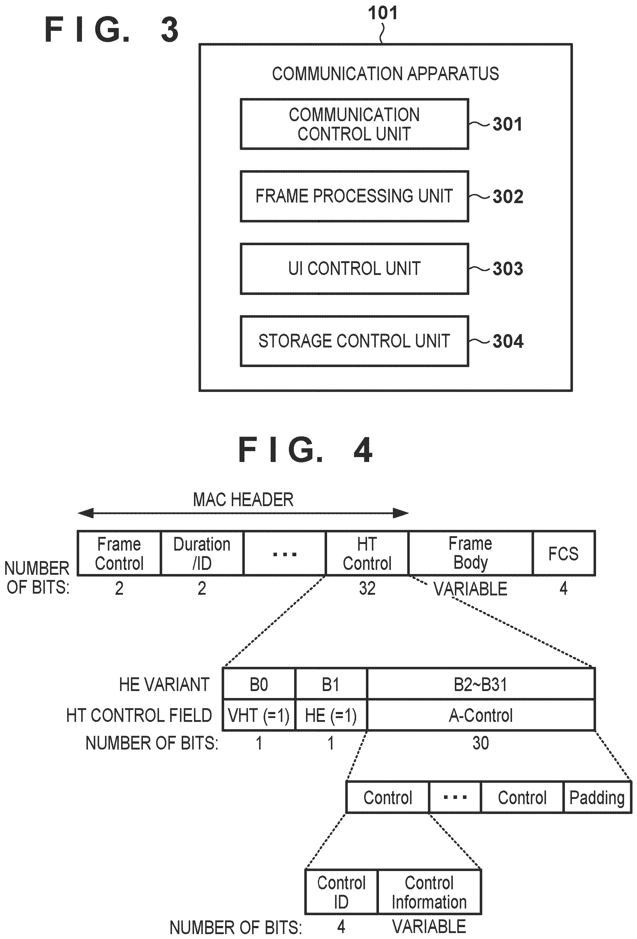

Fig. 3 is a block diagram showing an example of the functional arrangement of the communication apparatus 101. The communication apparatus 101 includes, as function units, one or more communication control units 301, a frame processing unit 302, a UI control unit 303, and a storage control unit 304. For example, to establish each of the plurality of links in multi-link communication, the communication apparatus 101 may include a plurality of communication control units 301 respectively corresponding to the plurality of links. Note that the communication apparatus 102 can have the same functional arrangement as that of the communication apparatus 101.

The communication control unit 301 communicates with an external apparatus such as the communication apparatus 102 by controlling the communication unit 206 and the antenna 207. The communication control unit 301 transmits a radio frame including a MAC (Media Access Control) frame generated by the frame processing unit 302, receives a radio frame from the partner apparatus, and transfers the received radio frame to the frame processing unit 302.

The frame processing unit 302 performs processing concerning a frame (MAC frame) for wireless communication by the communication control unit 301. More specifically, the frame processing unit 302 generates a MAC frame to be transmitted to the partner apparatus. The MAC frame is, for example, a management frame or a data frame (QoS data frame). The frame processing unit 302 forms the generated frame in accordance with setting data stored in the storage unit 201. Furthermore, the frame processing unit 302 analyzes a MAC frame received by the communication control unit 301 from the partner apparatus.

The UI control unit 303 accepts a user operation via a touch panel or the like and outputs information to the user (for example, displays a screen or outputs audio) by controlling the input unit 204 and the output unit 205. For example, the UI control unit 303 causes the input unit 204 to accept, from the user, a touch panel operation using the screen displayed by the output unit 205. The UI control unit 303 makes various settings in accordance with the accepted user operation, and stores setting data representing the settings in the storage unit 201 via the storage control unit 304.

The storage control unit 304 accesses the storage unit 201 in accordance with an instruction from another function unit. The storage control unit 304 stores data in the storage unit 201, and reads out data from the storage unit 201.

### <MAC Frame Structure (Comparative Example)>

Fig. 4 shows, as a comparative example, an example of the format of a MAC frame to be transmitted/received between the communication apparatuses 101 and 102, which is to be the premise of each embodiment to be described below. The frame format shown in Fig. 4 complies with the IEEE 802.11 series standard, and can be used for, for example, a QoS data frame or a management frame.

As shown in Fig. 4, the frame includes a 4-octet (32-bit) HT (High Throughput) Control field in part of a MAC header. If both the first 2 bits (bits B0 and B1) in the HT Control field are set to "1", the HT Control field is configured as an HE variant. In this case, a 30-bit (bits B2 to B31) subfield following the first 2 bits (B0 and B1) in the HT Control field is formed as an A-Control (Aggregated Control) subfield. The A-Control subfield is added with correspondence information of the IEEE 802.11 series standards (IEEE 802.11ax standard and its successor standard) after the HE standard.

The A-Control subfield can include one or more Control subfields. Each Control subfield is formed by a 4-bit Control ID subfield and a variable-length Control Information subfield. An ID value stored in the Control ID subfield is used to identify the type of control information stored in the corresponding Control Information subfield.

Although the HT Control field is currently assigned with a 4-octet (32-bit) length, the length of the HT Control field may be short due to, for example, an increase in control information along with function extension in the future. The number of bits of the Control ID subfield used to identify the type of control information stored in the Control Information subfield may also be short due to an increase in number of types of control information.

To cope with this, each of the following embodiments will describe an example in which wireless communication is performed between the communication apparatuses 101 and 102 using a MAC frame including a control field (Extended HT Control field) extended to be able to more flexibly store control information.

### [First Embodiment]

The first embodiment will describe an example of adding, to a MAC frame, a variable-length extended field for extending an HT Control field (A-Control subfield) based on the existing frame format shown in Fig. 4.

### <MAC Frame Structure>

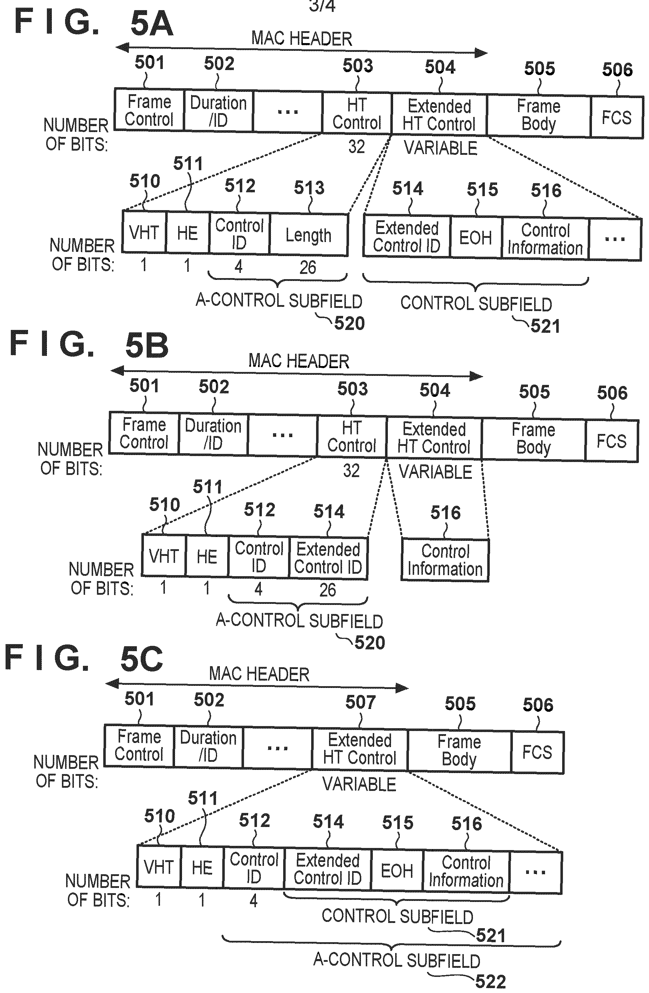

Fig. 5A shows an example of the format of a MAC frame to be transmitted/received between communication apparatuses 101 and 102 according to the first embodiment. The frame format shown in Fig. 5A is obtained by extending the frame format shown in Fig. 4, and can be used for, for example, a QoS data frame or a management frame.

As shown in Fig. 5A, the frame includes a Frame Control field 501, a Duration/ID field 502, an HT Control field 503, and an Extended HT Control field 504. These fields are part of a MAC header. The frame further includes a Frame Body field 505 and an FCS (Frame Check Sequence) field 506.

The Frame Body field 505 is a field that stores data (information) to be transmitted. In the case of the management frame, for example, the state or information of the apparatus can be transmitted to the partner apparatus using the Frame Body field 505. The FCS field 506 stores a code for verifying the presence/absence of an error in the received frame in the reception-side communication apparatus of the MAC frame. The reception-side communication apparatus verifies the presence/absence of an error in the received frame by comparing a code obtained by calculation processing based on the contents of the received frame, with the code stored in the FCS field 506.

Note that the frame may include fields other than the fields shown in Fig. 5A or need not include some of the fields shown in Fig. 5A. For example, the MAC header of the frame may further include an Address field indicating the MAC address of the destination or the like, and a Sequence Control field indicating the sequence number of the data to be transmitted or the like. The respective fields forming the MAC header will be described below.

The Frame Control field 501 is used to identify the protocol version of the frame itself and the type of the frame. If, for example, both the values of the first 2 bits (B0 and B1) in the Frame Control field 501 are "0", this indicates that the protocol version is 0. As an example, this embodiment targets a frame whose protocol version is 0, but the protocol version is not limited to this. If the protocol version is 0, the type of the frame changes depending on the values of 6 bits (B2 to B7) following the first 2 bits. For example, if B2 and B3 are "00", this indicates a management frame as the type of the frame, and if B2 and B3 are "01", this indicates a data frame as the type of the frame.

If, for example, the frame is a management frame or a QoS data frame, the Duration/ID field 502 indicates a time during which a communication band is occupied by this frame and a response to this frame.

The HT Control field 503 is a field for storing control information, and is a field added with attribute information and additional information given for each frame. The HT Control field 503 is formed by a plurality of subfields, and includes a VHT (Very High Throughput) subfield 510, an HE subfield 511, a Control ID subfield 512, and a Length subfield 513.

1 bit is assigned to each of the VHT subfield 510 and the HE subfield 511. The VHT subfield 510 and the HE subfield 511 indicate the type of additional information corresponding to the subfield following these subfields. In this embodiment, the VHT subfield 510 and the HE subfield 511, that are the first 2 bits (B0 and B1) in the HT Control field, are set to "1". This indicates that the subfield following these subfields is an A-Control subfield.

In this embodiment, as shown in Fig. 5A, an A-Control subfield 520 includes the Control ID subfield (control ID subfield) 512 and the Length subfield (length subfield) 513. The control ID subfield 512 and the length subfield 513 are provided in a case where both the VHT subfield 510 and the HE subfield 511 are set to "1" (that is, the A-Control subfield 520 is provided). The control ID subfield 512 is a 4-bit subfield, similar to the Control ID subfield included in the existing frame format shown in Fig. 4. The 30-bitA-Control subfield 520 is formed by the 4-bit control ID subfield 512 and the 26-bit length subfield 513.

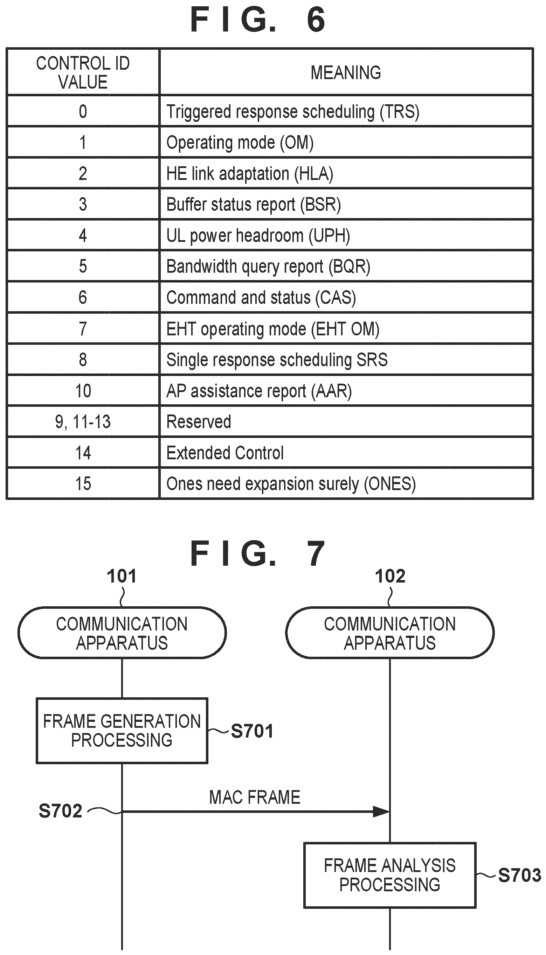

Fig. 6 shows an example of the correspondence between the value of the control ID subfield and its meaning. The MAC frame according to this embodiment is formed to further include an extended field by the control ID subfield 512 included in the A-Control subfield 520 being set to a specific value. For example, as shown in Fig. 6, if the set value (control ID value) of the control ID subfield 512 is "14", the Extended HT Control field 504 is provided as an extended field in the frame. The Extended HT Control field 504 corresponds to a variable-length extended field for extending the A-Control subfield.

In the example shown in Fig. 5A, the Extended HT Control field 504 is provided next to the HT Control field 503. In a case where the control ID subfield 512 is set to a specific value ("14" in Fig. 6) in this way, this indicates that the type of the field (subfield) following the HT Control field 503 (A-Control subfield 520) is the Extended HT Control field (Extended Control ID subfield). Note that the above specific value set in the control ID subfield 512 may be a value (for example, "15") other than "14".

The length subfield 513 indicates the length of the Extended HT Control field 504 (extended field) following this subfield. The length indicated by the length subfield 513 may be, for example, a bit length or a byte length. Note that the length subfield 513 may indicate information other than the length of the Extended HT Control field 504. For example, the length subfield 513 may indicate the number of control subfields (a set of subfields 514 to 516 to be described later) included in the Extended HT Control field 504 (extended field).

Note that the length subfield 513 need not exist in the A-Control subfield 520 or the whole length subfield 513 may be filled with a bit of "0" or "1". Alternatively, in a 26-bit subfield obtained by excluding the control ID subfield 512 (4 bits) in the A-Control subfield 520, a part may be used as a length subfield and the remaining part may be filled with a bit of "0" or "1".

The Extended HT Control field 504 is added as a variable-length extended field for extending the HT Control field (A-Control subfield) to form part of the MAC header. The length (the number of octets) of the whole Extended HT Control field 504 is variable. For example, the Extended HT Control field may be defined to have 4 octets.

The Extended HT Control field 504 includes one or more Control subfields (control subfields) 521. Each control subfield 521 includes the Extended Control ID subfield 514, the Extended Control ID subfield (extended control ID subfield) 514, the EOH (End of HE control) subfield 515, and the Control Information subfield (control information subfield) 516.

The control information subfield 516 stores control information added to the MAC frame. The control information includes, for example, various kinds of information associated with the operation or function of the communication apparatus 101 or 102 such as control information for optimizing a connection state or the number of queues in a buffer. The extended control ID subfield 514 stores an ID (identification information) corresponding to the control information in the corresponding control information subfield 516. The extended control ID subfield 514 is an additional control ID subfield to be added in addition to the control ID subfield 512. The extended control ID subfield 514 is formed to have a length (the number of bits) necessary to identify the type of the control information stored in the control information subfield 516. That is, the length of the Extended Control ID subfield 514 can be determined in accordance with the number of types of control information.

The EOH subfield 515 indicates whether the control subfield 521 including the EOH subfield is the end of the Extended HT Control field 504 (whether the control subfield 521 is further added). For example, if "1" is set in the EOH subfield 515, one control subfield 521 is further added to the Extended HT Control field 504. On the other hand, if "0" is set in the EOH subfield 515, the Control subfield 521 including this EOH subfield is the end of the Extended HT Control field 504. That is, no further control subfield is added in the Extended HT Control field 504. As described above, the EOH subfield 515 is an example of an end subfield indicating whether the control subfield including this EOH subfield is the end of the extended field.

Note that the EOH subfield 515 need not exist in the Control subfield 521. In a case where the EOH subfield 515 does not exist, for example, it is possible to analyze the number of control subfields following in the Extended HT Control field 504, based on the length of the Extended HT Control field 504 (extended field) or the number of control subfields, which is indicated by the length subfield 513.

### <Processing Procedure>

Fig. 7 is a sequence chart showing the procedure of communication processing by the communication apparatuses 101 and 102, and shows an example of transmitting a MAC frame from the communication apparatus 101 to the communication apparatus 102 by wireless communication complying with the IEEE 802.11 series standard.

In S701, the communication apparatus 101 performs frame generation processing of generating a MAC frame to be transmitted to the communication apparatus 102. The communication apparatus 101 generates a MAC frame having the format shown in Fig. 5A in accordance with the setting data stored in the storage unit 201. The generated MAC frame is, for example, a management frame or a data frame (QoS data frame). In S702, the communication apparatus 101 transmits the generated MAC frame to the communication apparatus 102 by wireless communication.

Upon receiving, by wireless communication, the MAC frame transmitted from the communication apparatus 101, the communication apparatus 102 performs, in S703, frame analysis processing of analyzing the received MAC frame. In the analysis processing, by analyzing the received MAC frame in accordance with the format shown in Fig. 5A, control information is acquired while acquiring the set value of each field or subfield.

As described above, the communication apparatus according to this embodiment generates a MAC frame including the HT Control field 503, which complies with the IEEE 802.11 series standard. In the generated MAC frame, the HT Control field 503 is formed to include the A-Control subfield 520 by each of the first 2 bits being set to 1. Furthermore, the MAC frame is formed to further include a variable-length extended field for extending the A-Control subfield 520 included in the HT Control field 503. The communication apparatus transmits the generated MAC frame to the partner apparatus.

According to this embodiment, it is possible to add control information to a MAC frame to be generated, while maintaining backward compatibility with respect to the IEEE 802.11 series standard. Furthermore, by newly preparing the Extended HT Control field 504 as a variable-length extended field for extending the A-Control subfield 520, it is possible to more flexibly add control information. Thus, even if the number of types of control information increases, it is possible to prepare a subfield having the number of bits necessary to store control ID values respectively corresponding to the types of control information. Therefore, it is possible to perform wireless communication between the communication apparatuses 101 and 102 using the MAC frame including the control field (Extended HT Control field 504) extended to be able to more flexibly store control information.

### <Modification>

The format of the MAC frame shown in Fig. 5A can variously be changed, as exemplified below. For example, the A-Control subfield 520 and the Extended HT Control field 504 (control subfield 521) may be formed to include the subfields in the order of, for example, the control ID subfield 512, the extended control ID subfield 514, the length subfield 513, the EOH subfield 515, and the control information subfield 516.

Alternatively, the length subfield 513 and the EOH subfield 515 may be excluded from the MAC frame shown in Fig. 5A. In this case, the A-Control subfield 520 and the Extended HT Control field 504 (control subfield 521) may be formed to include the subfields in the order of the control ID subfield 512, the extended control ID subfield 514, and the control information subfield 516.

Fig. 5B shows an example of the format of the MAC frame. In the example shown in Fig. 5B, the A-Control subfield 520 is formed to include the control ID subfield 512 and the extended control ID subfield 514 (additional control ID subfield). Furthermore, the Extended HT Control field 504 (extended field) is formed to include the control information subfield 516 that stores control information added to the MAC frame. The extended control ID subfield 514 stores an ID (identification information) corresponding to the control information in the control information subfield 516 (Extended HT Control field 504).

By using the format of the MAC frame, it is possible to perform wireless communication between the communication apparatuses 101 and 102 using the MAC frame including the control field (Extended HT Control field 504) extended to be able to more flexibly store the control information. As compared with the first embodiment (Fig. 5A) and the second embodiment (Fig. 5C) to be described later, it is possible to reduce the number of subfields in the extended field (Extended HT Control field 504), thereby implementing a more efficient frame structure.

### [Second Embodiment]

The second embodiment will describe an example of using a MAC frame including a control field extended to be able to more flexibly store control information, by extending a part (HT Control field) of the existing frame format shown in Fig. 4. Note that parts different from the first embodiment will mainly be described below.

Fig. 5C shows an example of the format of a MAC frame to be transmitted/received between communication apparatuses 101 and 102 according to the first embodiment. The frame format shown in Fig. 5C is obtained by extending the frame format shown in Fig. 4, and can be used for, for example, a QoS data frame or a management frame.

As shown in Fig. 5C, the frame includes a Frame Control field 501, a Duration/ID field 502, and an Extended HT Control field 507. These fields are part of a MAC header. The frame further includes a Frame Body field 505 and an FCS field 506. The Frame Control field 501, the Duration/ID field 502, the Frame Body field 505, and the FCS field 506 are the same as those in the first embodiment. Note that similar to the first embodiment, the frame may include fields other than the fields shown in Fig. 5C or need not include some of the fields shown in Fig. 5C.

The IEEE 802.11 series standard defines that the length of the HT Control field is 4 octets (32 bits). In this embodiment, the HT Control field shown in Fig. 4 is extended to a variable-length field shown as the Extended HT Control field 507 in Fig. 5C. As described above, the HT Control field is formed to include an A-Control subfield 522 by each of the first 2 bits (B0 and B1) in this field being set to "1". In this embodiment, the A-Control subfield 522 in the HT Control field is extended to a variable-length subfield. In this way, by forming the HT Control field as an extended field (Extended HT Control field 507), it is possible to use the MAC frame including the control field extended to be able to more flexibly store control information.

As shown in Fig. 5C, the Extended HT Control field 507 includes a 1-bit VHT subfield 510 and a 1-bit HE subfield 511. These subfields correspond to the first 2 bits (B0 and B1) in the HT Control field, and are each set to "1". Therefore, similar to the HT Control field shown in Fig. 4, the A-Control subfield 522 is arranged after these subfields.

The A-Control subfield 522 shown in Fig. 5C includes a control ID subfield 512, similar to Figs. 4, 5A, and 5B. In this embodiment, the MAC frame is formed to include the A-Control subfield 522 extended to the variable-length subfield by the control ID subfield 512 being set to a specific value. If, for example, the set value (control ID value) of the control ID subfield 512 is "14", the A-Control subfield 522 is extended to the variable-length subfield. Note that the above specific value set in the control ID subfield 512 may be a value (for example, "15") other than "14".

The variable-length A-Control subfield 522 includes the control ID subfield 512 and one or more control subfields 521. Each control subfield 521 includes an extended control ID subfield 514, an EOH subfield 515, and a control information subfield 516, and these subfields are the same as those in the first embodiment.

The EOH subfield 515 indicates whether the control subfield 521 including this EOH subfield is the end of the A-Control subfield 522 (Extended HT Control field). For example, if "0" is set in the EOH subfield 515, the Control subfield 521 including this EOH subfield is the end of the A-Control subfield 522 (Extended HT Control field 507). As described above, the EOH subfield 515 is an example of an end subfield indicating whether the control subfield including this EOH subfield is the end of the A-Control subfield.

Note that a subfield (padding subfield) for adjusting the control information subfield 516 to 8 bit units in length may be appended to the control subfield 521. If, for example, a length from the VHT subfield 510 to the last control information subfield 516 in the Extended HT Control field 507 is (n*8 + 5) bits, a 3-bit padding subfield is provided.

Various changes can be made to the format of the MAC frame according to this embodiment. For example, each control subfield 521 may be formed to include the subfields 510 to 516. Similar to the first embodiment, the EOH subfield 515 need not exist in the control subfield 521. For example, a length subfield 513 indicating the length of the Extended HT Control field 507 (extended field) may be included after the extended control ID subfield 514.

Note that the processing procedure for wireless communication using the above-described MAC frame, which is executed by the communication apparatuses 102 and 103, is the same as in the first embodiment (Figs. 5A and 5B).

The communication apparatus according to this embodiment generates a MAC frame including the HT Control field 522, which complies with the IEEE 802.11 series standard. In the generated MAC frame, the HT Control field is formed to include the A-Control subfield 522 by each of the first 2 bits being set to 1. Furthermore, the HT Control field is formed as an extended field (Extended HT Control field 507) by extending the A-Control subfield 522 to a variable-length subfield. The communication apparatus transmits the generated MAC frame to the partner apparatus.

According to this embodiment, it is possible to extend the length of the HT Control field, and add more control information to the HT Control field. By applying this embodiment, it is possible to ensure, in the Extended HT Control field 507, a subfield having a length necessary to store control information for extension of NSS (the number of spatial streams) even when extending HLA (HE Link Adaptation) control for EHT. On the other hand, if the length of the control information subfield 516 is short, it is possible to set the length of the Extended HT Control field 507 to 4 octets or less, thereby implementing a more flexible frame structure.

### [Other Embodiments]

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-073673 filed April 27, 2022, which is hereby incorporated by reference herein.

## Claims

1. A communication apparatus comprising:
generation means for generating a MAC frame including an HT Control field, which complies with an IEEE 802.11 series standard, wherein the HT Control field is formed to include an A-Control subfield by each of first 2 bits being set to 1 and the MAC frame is formed to further include a variable-length extended field for extending the A-Control subfield included in the HT Control field; and
transmission means for transmitting the MAC frame generated by the generation means.

2. The communication apparatus according to claim 1, wherein the MAC frame is formed to further include the extended field by a control ID subfield included in the A-Control subfield being set to a specific value.

3. The communication apparatus according to claim 2, wherein the A-Control subfield includes the control ID subfield and a length subfield indicating a length of the extended field.

4. The communication apparatus according to claim 2 or 3, wherein the extended field includes at least one control subfield, and each of the at least one control subfield includes a control information subfield storing control information added to the MAC frame and an additional control ID subfield storing an ID corresponding to the control information.

5. The communication apparatus according to claim 4, wherein
the A-Control subfield includes the control ID subfield and a length subfield indicating a length of the extended field, and
the length subfield indicates a number of control subfields included in the extended field.

6. The communication apparatus according to claim 4 or 5, wherein each of the at least one control subfield further includes an end subfield indicating whether the control subfield is an end of the extended field.

7. The communication apparatus according to claim 2, wherein
the A-Control subfield and the extended field are formed to include the control ID subfield and at least one control subfield, and
each of the at least one control subfield includes a control information subfield storing control information added to the MAC frame and an additional control ID subfield storing an ID corresponding to the control information.

8. The communication apparatus according to claim 7, wherein the A-Control subfield and the extended field are formed to further include a length subfield indicating a length of the extended field.

9. The communication apparatus according to claim 2, wherein
the A-Control subfield is formed to include the control ID subfield and an additional control ID subfield, and
the MAC frame is formed to store control information added to the MAC frame in the extended field and store an ID corresponding to the control information in the additional control ID subfield.

10. A communication apparatus comprising:
generation means for generating a MAC frame including an HT Control field, which complies with an IEEE 802.11 series standard, wherein the HT Control field is formed to include an A-Control subfield by each of first 2 bits being set to 1 and the HT Control field is formed as an extended field by extending the A-Control subfield to a variable-length subfield; and
transmission means for transmitting the MAC frame generated by the generation means.

11. The communication apparatus according to claim 10, wherein the MAC frame is formed to include the A-Control subfield extended to the variable-length subfield by a control ID subfield included in the A-Control subfield being set to a specific value.

12. The communication apparatus according to claim 11, wherein the A-Control subfield includes the control ID subfield and at least one control subfield, and each of the at least one control subfield includes a control information subfield storing control information added to the MAC frame and an additional control ID subfield storing an ID corresponding to the control information.

13. The communication apparatus according to claim 12, wherein the A-Control subfield further includes a length subfield indicating a length of the A-Control subfield.

14. The communication apparatus according to claim 12 or 13, wherein each of the at least one control subfield further includes an end subfield indicating whether the control subfield is an end of the A-Control subfield.

15. A communication apparatus comprising:
reception means for receiving a MAC frame including an HT Control field, which complies with an IEEE 802.11 series standard; and
analysis means for analyzing the MAC frame received by the reception means, wherein the HT Control field is formed to include an A-Control subfield by each of first 2 bits being set to 1 and the MAC frame is formed to further include a variable-length extended field for extending the A-Control subfield included in the HT Control field.

16. The communication apparatus according to claim 15, wherein the MAC frame is formed to further include the extended field by a control ID subfield included in the A-Control subfield being set to a specific value.

17. The communication apparatus according to claim 16, wherein the A-Control subfield includes the control ID subfield and a length subfield indicating a length of the extended field.

18. The communication apparatus according to claim 16 or 17, wherein the extended field includes at least one control subfield, and each of the at least one control subfield includes a control information subfield storing control information added to the MAC frame and an additional control ID subfield storing an ID corresponding to the control information.

19. The communication apparatus according to claim 18, wherein
the A-Control subfield includes the control ID subfield and a length subfield indicating a length of the extended field, and
the length subfield indicates a number of control subfields included in the extended field.

20. The communication apparatus according to claim 18 or 19, wherein each of the at least one control subfield further includes an end subfield indicating whether the control subfield is an end of the extended field.

21. The communication apparatus according to claim 16, wherein
the A-Control subfield and the extended field are formed to include the control ID subfield and at least one control subfield, and
each of the at least one control subfield includes a control information subfield storing control information added to the MAC frame and an additional control ID subfield storing an ID corresponding to the control information.

22. The communication apparatus according to claim 21, wherein the A-Control subfield and the extended field are formed to further include a length subfield indicating a length of the extended field.

23. The communication apparatus according to claim 16, wherein
the A-Control subfield is formed to include the control ID subfield and an additional control ID subfield, and
the MAC frame is formed to store control information added to the MAC frame in the extended field and store an ID corresponding to the control information in the additional control ID subfield.

24. A communication apparatus comprising:
reception means for receiving a MAC frame including an HT Control field, which complies with an IEEE 802.11 series standard; and
analysis means for analyzing the MAC frame received by the reception means, wherein the HT Control field is formed to include an A-Control subfield by each of first 2 bits being set to 1 and the HT Control field is formed as an extended field by extending the A-Control subfield to a variable-length subfield.

25. The communication apparatus according to claim 24, wherein the MAC frame is formed to include the A-Control subfield extended to the variable-length subfield by a control ID subfield included in the A-Control subfield being set to a specific value.

26. The communication apparatus according to claim 25, wherein the A-Control subfield includes the control ID subfield and at least one control subfield, and each of the at least one control subfield includes a control information subfield storing control information added to the MAC frame and an additional control ID subfield storing an ID corresponding to the control information.

27. The communication apparatus according to claim 26, wherein the A-Control subfield further includes a length subfield indicating a length of the A-Control subfield.

28. The communication apparatus according to claim 26 or 27, wherein each of the at least one control subfield further includes an end subfield indicating whether the control subfield is an end of the A-Control subfield.

29. A control method for a communication apparatus, comprising:
generating a MAC frame including an HT Control field, which complies with an IEEE 802.11 series standard, wherein the HT Control field is formed to include an A-Control subfield by each of first 2 bits being set to 1 and the MAC frame is formed to further include a variable-length extended field for extending the A-Control subfield included in the HT Control field; and
transmitting the MAC frame generated in the generating.

30. A control method for a communication apparatus, comprising:
generating a MAC frame including an HT Control field, which complies with an IEEE 802.11 series standard, wherein the HT Control field is formed to include an A-Control subfield by each of first 2 bits being set to 1 and the HT Control field is formed as an extended field by extending the A-Control subfield to a variable-length subfield; and
transmitting the MAC frame generated in the generating.

31. A control method for a communication apparatus, comprising:
receiving a MAC frame including an HT Control field, which complies with an IEEE 802.11 series standard; and
analyzing the MAC frame received in the receiving, wherein the HT Control field is formed to include an A-Control subfield by each of first 2 bits being set to 1 and the MAC frame is formed to further include a variable-length extended field for extending the A-Control subfield included in the HT Control field.

32. A control method for a communication apparatus, comprising:
receiving a MAC frame including an HT Control field, which complies with an IEEE 802.11 series standard; and
analyzing the MAC frame received in the receiving, wherein the HT Control field is formed to include an A-Control subfield by each of first 2 bits being set to 1 and the HT Control field is formed as an extended field by extending the A-Control subfield to a variable-length subfield.

33. A program for causing a computer to execute each step of a control method for a communication apparatus according to any one of claims 29 to 32.
